(19) **Europäisches Patentamt / European Patent Office / Office européen des brevets**

(11) **EP 2 206 439 B1**

(12) **EUROPEAN PATENT SPECIFICATION**

(45) Date of publication and mention
of the grant of the patent:
**18.04.2012 Bulletin 2012/16**

(51) Int Cl.:
*A23G 9/00* (2006.01)      *A23G 9/32* (2006.01)
*A23G 1/32* (2006.01)      *A23G 1/34* (2006.01)

(21) Application number: **09177846.4**

(22) Date of filing: **03.12.2009**

(54) **Frozen confectionery products comprising theobromine and caffeine**

Gefrorene Süßwarenprodukte, die Theobromin und Koffein enthalten

Produits de confiserie surgelés comprenant de la caféine et de la théobromine

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.12.2008 EP 08172986**
**29.12.2008 EP 08172987**

(43) Date of publication of application:
**14.07.2010 Bulletin 2010/28**

(73) Proprietors:
• **Unilever PLC, A Company Registered in England and**
**Wales under Company no. 41424**
**London EC4Y 0DY**
**Greater London (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK SM TR**

(72) Inventor: **Hoddle, Andrew**
**Bedford, Bedfordshire MK44 1LQ (GB)**

(74) Representative: **Clarke, Christopher John**
**Unilever Patent Group**
**Colworth House**
**Sharnbrook**
**Bedford MK44 1LQ (GB)**

(56) References cited:
**EP-A- 0 795 273      EP-A- 1 787 527**

**ES-A1- 2 166 725**

• **Anonymous/loule02: "Picard Best chocolat -Eclat-moi la fève..." 22 June 2005 (2005-06-22), pages 1-2, XP002569867 Retrieved from the Internet: URL:http://www.ciao.fr/Picard_Best_chocola t__751226> [retrieved on 2010-02-22]**
• **RACHEL/ANONYMOUS: "DARK CHOCOLATE ICE CREAM WITH COCOA NIBS" COCONUT & LIME RECIPES, [Online] 23 April 2005 (2005-04-23), XP002516346 Retrieved from the Internet: URL:http://coconutlime.blogspot.com/2008/0 4/dark-chocolate-ice-cream-with-cocoa.html > [retrieved on 2009-02-20]**
• **H.J.SMITH, E.A.GAFFAN, P.J.ROGERS: "Methylxanthines are the psycho-pharmacologically active constitutes of chocolate" PSYCHOPHARMACOLOGY, no. 176, 9 January 2004 (2004-01-09), pages 412-419, XP002516347**
• **ANONYMOUS: "Nutritional values of Dark chocolate & Cocoa powder" USDA NATIONAL NUTRIENT DATABASE, [Online] January 2008 (2008-01), XP002516348 Retrieved from the Internet: URL:http://www.nal.usda.gov/fnic/foodcomp/ search/> [retrieved on 2009-02-20]**
• **NATASHA TELLES: "Mood foods: Dancing to a merry tune" FROST & SULLIVAN MARKET INSIGHT, [Online] 18 February 2008 (2008-02-18), XP002516349 Retrieved from the Internet: URL: http://www.frost.com/prod/servlet/mark et-insight-print.pag?docid=121721079> [retrieved on 2009-02-23]**

- **Anonymous/ Picard: "4 Best chocolat 70% de cacao-fèves de cacao" 22 February 2010 (2010-02-22), XP002569868 Retrieved from the Internet: URL:http://www.picard.fr/Modules/ LaBoutiqu e/les_batonnets_glaces99/Produits/ 4_best_c hocolat_70_de_cacao_feves_de_ cacao1736.htm I> [retrieved on 2010-02-22]**

Remarks:
  The file contains technical information submitted after the application was filed and not included in this specification

## Description

### Technical Field of the Invention

The present invention relates to frozen confectionery products, in particular to chocolate-containing frozen confectionery products that are mood-enhancing when consumed.

### Background to the invention

Chocolate and chocolate products are believed to be mood enhancing. Part of the reason may be the pleasant taste that can help to make consumers feel happy. Additionally, chocolate contains substances that, when consumed in sufficient quantity, are psycho-pharmacologically active (Smit et al., Psychopharmacology 2004, 176, pp 412-419). In particular caffeine (1,3,7-trimethylxanthine) and theobromine (3,7-dimethylxanthine) are known to affect the mood when ingested, and additionally have other beneficial effects like improved brain function, higher alertness and appetite suppression. It would be appealing to many consumers to eat chocolate to enhance their mood rather than, for example, to take prescription medicines. Typically, cocoa powder comprises approximately 2 wt% theobromine and 0.2% caffeine. However, these amounts are too low to have a substantial effect on mood states at the normal levels of cocoa solids found in most food products. Therefore there is a desire to enrich food products with caffeine and theobromine in order to achieve the beneficial effects of these compounds when consumed as ingredients of a food product.

However, adding caffeine and theobromine as compounds can detract from the natural image of the product which may therefore be less appealing to consumers. Moreover, caffeine and theobromine are compounds that are known for their bitterness. Thus food products enriched with these compounds, in order to exhibit their positive effects on consumption, may be more bitter tasting, which is not liked by many consumers, especially children. Therefore it is desirable to develop products which are not bitter tasting and that contain increased amounts of caffeine and theobromine, particularly from natural sources.

The internee "befog" entries http://www.ciao.fr/Picard_Best_chocolat_751226 and http://www.coconutandlime.com/2008/04/dark-chocolate-ice-cream-cocoa.html disclose frozen confections containing cocoa solids. The scientific publication by Smit at al, in Psychopharmacology, 2004, 176:412-419 discloses that methylxanthines are the psycho-pharmacologically active constituents of chocolate. ES 2 166 725 discloses a frozen confection product made using coffee ice cream and chocolate ice cream.

### Brief Description of the Invention

We have now found that it is possible to produce a chocolate frozen confection product containing increased amounts of theobromine and caffeine from natural sources, wherein the caffeine and theobromine are provided by three components of the product. Accordingly, in a first aspect the present invention provides a frozen confection product comprising:

- from 20 to 50% by weight of the product of a frozen composition comprising cocoa solids;
- from 20 to 60% by weight of the product of a chocolate or chocolate analogue comprising cocoa solids; and
- from 5 to 20% by weight of the product of cocoa nibs;

wherein the product contains at least 400mg of theobromine and at least 40mg of caffeine per 100 grams. Surprisingly, we have found that it does not taste very bitter, despite the very high levels of theobromine and caffeine.

The products according to the invention preferably comprise a total amount of at least 500 mg of theobromine, more preferably at least 600 mg, most preferably at least 700 mg per 100g of the product.

The products according to the invention preferably comprise a total amount of at least 50mg of caffeine, more preferably at least 70mg, most preferably at least 100mg per 100g of the product.

Preferably the product comprises from 30 to 50 wt% of the frozen composition.

Preferably the product comprises from 25 to 45 wt% of the chocolate or chocolate analogue.

Preferably the product comprises from 10 to 15 wt% of cocoa nibs.

Preferably the frozen composition has an overrun of at least 50%.

### Detailed Description of the Invention

All percentages, unless otherwise stated, refer to the percentage by weight, with the exception of percentages cited in relation to the overrun.

The products of the present inventions comprise a frozen composition containing cocoa solids, a chocolate or chocolate analogue containing cocoa solids and cocoa nibs.

Frozen composition

The term "frozen composition" means an edible composition made by freezing a mix of ingredients which includes water. Frozen compositions include ice cream, water ice, frozen yoghurt and the like. In the present invention, the frozen composition contains cocoa solids, for example it may be chocolate flavoured ice cream. Ice cream has been shown to have an effect on the orbitofrontal cortex, a part of the brain that is known to activate when people enjoy themselves (see for example "The Guardian", April 29 2005). The combination of chocolate and a frozen composition such as ice cream is therefore an especially suitable means for providing a mood-enhancing food product. In addition to the cocoa solids, the frozen composition typically contains fat, non-fat milk solids and sugars, together with other minor ingredients such as stabilisers, emulsifiers, colours and flavourings.

The frozen composition is preferably aerated, i.e. it has an overrun of more than 20%, preferably more than 50%, more preferably more than 75%. Preferably the frozen composition has an overrun of less than 200%, more preferably less than 150%, most preferably less than 120%. Overrun is defined by equation as follows and is measured at atmospheric pressure

$$\text{overrun \%} = \frac{\text{density of mix - density of frozen confection}}{\text{density of frozen confection}} \times 100$$

Chocolate / chocolate analogue compositions

The term "chocolate" as used herein includes dark chocolate and milk chocolate. The term "chocolate analogue" means chocolate-like fat-based confectionery compositions made with fats other than cocoa butter (for example cocoa butter equivalents, coconut oil or other vegetable oils). Such chocolate analogues are sometimes known as "couvertures". Chocolate analogues need not conform to standardized definitions of chocolate which are used in many countries. In addition to fat and cocoa solids, chocolate and chocolate analogues may contain milk solids, sugar or other sweeteners and flavourings.

The chocolate composition or chocolate analogue composition may be in any suitable form, such as a coating on the frozen composition, as pieces (inclusions) located within the frozen composition, or as a sauce, e.g. a ripple or swirl in the frozen composition.

Cocoa Nibs

The term "cocoa nibs" means small particles of cocoa bean. They are produced by drying cocoa beans, breaking them and then removing the pieces of shell. The remaining pieces of the cocoa bean kernel are known as cocoa nibs. Nibs are typically particles of about 2 - 7mm in size, such as about 3mm. The nibs may be incorporated into the frozen composition or the chocolate / chocolate analogue or both. The nibs are present in an amount of from 5 to 20% by weight of the product, preferably from 10 to 15%. We have found that if higher amounts of nibs are used, the nibs remain in the mouth after the frozen composition has melted and has been swallowed. The resulting mass of nibs is chewy, mouth-drying and difficult to break-down, resulting in an unpleasant and unacceptable sensory experience.

Products consisting of chocolate flavoured ice cream coated with chocolate or a chocolate analogue have been known for many years. These contain some theobromine and caffeine both from the cocoa solids which are used to flavour the ice cream and from the cocoa solids used in the coating. The quantities of theobromine and caffeine in a chocolate ice cream can be estimated by adding the contribution from each ingredient using the values given in chapter 10 of "Chocolate and Cocoa" Ed. Knight, Blackwell Science Ltd. (1999). Cocoa mass (=chocolate liquor) contains about 1.22% theobromine and 0.21% caffeine. Cocoa nibs have the same composition as cocoa mass. Cocoa powder contains 1.89 - 2.69% theobromine and 0.16 - 0.31% caffeine. Using this method, we have estimated that conventional chocolate ice creams contain about 70mg theobromine and 3mg of caffeine per 100 grams of ice cream.

The quantities can also be analytically determined by removing fat from the sample and analysing by HPLC. For example, Craig et al. (Journal of Food Science, vol. 49, January 1984, p.302-303) reported theobromine and caffeine levels in chocolate ice cream of 62 mg and 3.2 mg per 100g of ice cream respectively.

The maximum amount of cocoa powder that can be used in the frozen composition is about 12 wt%. If greater amounts of cocoa powder are used, the unfrozen mix becomes very viscous, and hence difficult to process, and in particular, difficult to aerate. This results in a hard, dense and unpleasant frozen composition. Similarly, the maximum amount of cocoa powder that can be used in the chocolate / chocolate analogue is about 25%. This is because the fat content of the chocolate / chocolate analogue must be at least 45% in order for it to be sufficiently fluid so that it is suitable for coating ice creams, and the sugar content must be at least about 30% so that it has an acceptable taste.

Chocolate ice creams that are coated with dark chocolate or that contain cocoa nibs can contain somewhat higher levels of theobromine and caffeine than standard chocolate ice creams. Of the commercially available ice cream products that the present inventors have investigated, Magnum™ Essence contains the highest levels of theobromine and caffeine. This product is a chocolate ice cream coated with chocolate and containing a dark chocolate core. Using HPLC (as described in example 1 below) it was found to contain a total of approximately 320mg theobromine and 30mg caffeine per 100 grams.

The increased amounts of caffeine and theobromine in the frozen confection product of the invention are achieved by means of the three components, each of which provides a source of theobromine and caffeine. In contrast, if only one or two components are used to achieve the same total amounts of theobromine and caffeine, the product is unsatisfactory.

The present invention will now be further described with reference to the following non-limiting examples.

Example 1

An ice cream mix was made using the ingredients shown in Table 1.

Table 1

| Ingredient | Amount (wt %) |
|---|---|
| Cocoa powder 10/12 | 12.0 |
| Butterfat | 8.0 |
| Glucose syrup 63DE 78% solids | 5.0 |
| Sucrose | 11.0 |
| Skim milk powder | 9.5 |
| Stabiliser | 0.156 |
| Emulsifier | 0.30 |
| Water | To 100 |

The mix was frozen and aerated in a Technohoy MF75 freezer to a temperature of approx -5°C and an overrun of approx 60%. The frozen ice cream was collected and cocoa nibs (Nibs-S-473 from Barry-Callebaut) were added at 9.0% (225g cocoa nibs made up to 2500g with mix). Samples were collected into 500ml cartons and hardened at -32°C in a blast freezer. After hardening, the blocks were cut into pieces which weighed 17g (approx 27ml). The products were coated in a chocolate coating containing 15% cocoa nibs, whose composition is given in Table 2. The amount of coating was determined by weighing and was found to be 13.3g of coating per 17g of ice cream.

Table 2

| Ingredient | Amount (wt%) |
|---|---|
| Sucrose | 34.4 |
| Cocoa butter | 11.1 |
| Butter oil | 10.6 |
| Cocoa mass | 28.5 |
| Soya lecithin | 0.43 |
| Cocoa nibs | 15.0 |

Thus the product consisted of 51% ice cream, 37% chocolate and 12% nibs. The theobromine and caffeine contents were determined by HPLC analysis as follows. The frozen samples were ground. Next, the fat was removed by extraction 3 times with petroleum spirit. The de-fatted samples were then analysed using a Phenyl Hexyl 250 x 4.6 id mm 5μ HPLC column (mobile phases: A = 10% acetonitrile, 0.5% acetic acid. B = 100% acetonitrile). The theobromine and caffeine contents were found to be 500 mg and 40 mg per 100 gram of product respectively. The frozen confection product contained only natural sources of caffeine and theobromine.

Products were tasted by an informal panel. None of the samples was considered to taste bitter, despite the high levels of caffeine and theobromine. All of the tasters considered the products to be acceptable sensorially. Because of the size of the nibs (approximately 3mm), only a relatively small amount were bitten into when the product was consumed. Most were swallowed whole, so that the bitterness of the cocoa was mostly not perceived. The nibs provided an interesting textural contrast with the ice cream which may also have distracted the tasters from any bitterness of the product.

Example 2

A comparative example was made wherein high levels of theobromine and caffeine were achieved, but with only using two components, i.e. ice cream and nibs. A chocolate ice cream was made containing 10 wt% cocoa powder and churned using a domestic ice cream maker (Gelato™ ice cream maker). 1030g of ice cream was combined with 330g nibs, to produce a product containing 24% nibs and 76% chocolate ice cream.

The theobromine and caffeine contents were determined by HPLC analysis as described above and found to be 540 mg and 50mg per 100 gram of product respectively. However, the product was not sensorially acceptable because the proportion of nibs was too high. There was a large mass of nibs left in the mouth after the ice cream had been swallowed and they were chewy, mouth-drying and difficult to break-down. was too high. There was a large mass of nibs left in the mouth after the ice cream had been swallowed and they were chewy, mouth-drying and difficult to break-down.

Example 3

A further comparative example was made by increasing the amount of cocoa powder in the ice cream whilst reducing the amount of nibs to an acceptable level. A chocolate ice cream was made containing 14 wt% cocoa powder. 1090g of ice cream was combined with 65g nibs, to produce a product containing 5.6% nibs and 95.4% chocolate ice cream.

The ice cream mix was very viscous and could not be churned by the domestic ice cream maker. The sample was frozen, and the overrun was measured to be only 9%.

The theobromine and caffeine contents were determined by HPLC analysis as described above and found to be 570 mg and 50mg per 100 gram of product respectively. The product was tasted and found to be unacceptable since it was very dense, hard and chewy in the mouth. It had an unpleasantly intense flavour of cocoa (rather than chocolate).

The examples demonstrate that by using three components (chocolate ice cream, chocolate and cocoa nibs), products with increased amounts of theobromine and caffeine from natural sources can be produced that have good texture and moreover surprisingly do not taste very bitter. In contrast, if only one or two components were used to achieve the same total amounts of theobromine and caffeine, the product is unsatisfactory.

**Claims**

1. A frozen confection product comprising:

   o from 20 to 50% by weight of the product of a frozen composition comprising cocoa solids;
   o from 20 to 60% by weight of the product of a chocolate or chocolate analogue comprising cocoa solids; and
   o from 5 to 20% by weight of the product of cocoa nibs;

   wherein the product contains at least 400 mg of theobromine and at least 40 mg of caffeine per 100 grams.

2. A frozen confection product according to claim 1 which comprises at least 500mg of theobromine per 100g of the product.

3. A frozen confection product according to claim 1 or claim 2 which comprises least 50mg of caffeine per 100g of the product.

4. A frozen confection product according to claim 3 which comprises least 100mg of caffeine per 100g of the product.

5. A frozen confection product according to any of claims 1 to 4 wherein the frozen composition constitutes from 30 to 50 wt% of the product.

6. A frozen confection product according to any of claims 1 to 5 wherein the chocolate or chocolate analogue constitutes from 25 to 45 wt% of the product.

7. A frozen confection product according to any of claims 1 to 6 wherein the cocoa nibs constitute from 10 to 15 wt% of the product.

8. A frozen confection product according to any of claims 1 to 7 wherein the frozen composition has an overrun of at least 50%.


**Patentansprüche**

1. Gefrorenes Süßwarenprodukt, umfassend:

   o 20 bis 50 Gew.-%, bezogen auf das Produkt, einer gefrorenen Zusammensetzung, die Kakao-Feststoffe umfasst;
   o 20 bis 60 Gew.-%, bezogen auf das Produkt, einer Schokolade oder eines Schokoladen-Analogons, umfassend Kakao-Feststoffe, und
   o 5 bis 20 Gew.-%, bezogen auf das Produkt, Kakao-Nibs;

   wobei das Produkt wenigstens 400 mg Theobromin und wenigstens 40 mg Coffein pro 100 g enthält.

2. Gefrorenes Süßwarenprodukt gemäß Anspruch 1, das wenigstens 500 mg Theobromin pro 100 g des Produkts umfasst.

3. Gefrorenes Süßwarenprodukt gemäß Anspruch 1 oder Anspruch 2, das wenigstens 50 mg Coffein pro 100 g des Produkts umfasst.

4. Gefrorenes Süßwarenprodukt gemäß Anspruch 3, das wenigstens 100 mg Coffein pro 100 g des Produkts umfasst.

5. Gefrorenes Süßwarenprodukt gemäß einem der Ansprüche 1 bis 4, wobei die gefrorene Zusammensetzung 30 bis 50 Gew.-% des Produkts bildet.

6. Gefrorenes Süßwarenprodukt gemäß einem der Ansprüche 1 bis 5, wobei die Schokolade oder das Schokoladen-Analogon 25 bis 45 Gew.-% des Produkts bildet.

7. Gefrorenes Süßwarenprodukt gemäß einem der Ansprüche 1 bis 6, wobei die Kakao-Nibs 10 bis 15 Gew.-% des Produkts bilden.

8. Gefrorenes Süßwarenprodukt gemäß einem der Ansprüche 1 bis 7, wobei die gefrorene Zusammensetzung einen Aufschlag von wenigstens 50 % hat.


**Revendications**

1. Produit de confiserie surgelé comprenant :

   o de 20 à 50 % en poids du produit d'une composition surgelée comprenant des fragments solides de cacao ;
   o de 20 à 60 % en poids du produit de chocolat ou d'un analogue de chocolat comprenant des fragments solides de cacao ;
   o de 5 à 20 % en poids du produit de grué de cacao ;

   dans lequel le produit contient au moins 400 mg de théobromine et au moins 40 mg de caféine pour 100 grammes.

2. Produit de confiserie surgelé selon la revendication 1 qui comprend au moins 500 mg de théobromine pour 100 g de produit.

**3.** Produit de confiserie surgelé selon la revendication 1 ou la revendication 2 qui comprend au moins 50 mg de caféine pour 100 g de produit.

**4.** Produit de confiserie surgelé selon la revendication 3 qui comprend au moins 100 mg de caféine pour 100 g de produit.

**5.** Produit de confiserie surgelé selon l'une quelconque des revendications 1 à 4 dans lequel la composition surgelée constitue de 30 à 50 % en poids du produit.

**6.** Produit de confiserie surgelé selon l'une quelconque des revendications 1 à 5 dans lequel le chocolat ou l'analogue de chocolat constitue de 25 à 45 % en poids du produit.

**7.** Produit de confiserie surgelé selon l'une quelconque des revendications 1 à 6 dans lequel les graines de cacao constituent de 10 à 15 % en poids du produit.

**8.** Produit de confiserie surgelé selon l'une quelconque des revendications 1 à 7 dans lequel la composition surgelée a un excédent d'au moins 50 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2166725

**Non-patent literature cited in the description**

- **Smit et al.** *Psychopharmacology,* 2004, vol. 176, 412-419
- **Smit.** *Psychopharmacology,* 2004, vol. 176, 412-419
- *The Guardian,* 29 April 2005
- Chocolate and Cocoa. Blackwell Science Ltd, 1999
- **Craig et al.** *Journal of Food Science,* January 1984, vol. 49, 302-303